# EUROPEAN PATENT APPLICATION

(11) **EP 1 657 949 A1**
(43) Date of publication of application: **17.05.2006**
(21) Application number: 05256619.7
(22) Date of filing: 25.10.2005
(51) Int. Cl.: H04Q 7/38

(54) **Method for reducing re-registrations and/or reconnections due to ping-pong effect for dormant mobile terminals**

(30) Priority: 10.11.2004 US 985439
(71) Applicant: LUCENT TECHNOLOGIES INC., Murray Hill, New Jersey 07974-0636 (US)
(72) Inventor: Burgess, John K., Morristown, NW Jersey 07960 (US); Rossetti, David Albert, Randolph, New Jersey 07869 (US); Walsh, Patrick Jay, Naperville, Illinois 60564 (US)
(74) Representative: Sarup, David Alexander

(57) **Abstract**

In a 3G CDMA2000 IS-2000 wireless communications system, a base station at the border between two packet zones, transmits an Extended System Parameters message that includes the identity of a primary packet zone supported by that base station as well as the identities of other secondary adjoining packet zones supported by that base station. When transiting back and forth the borders between packet zones, a dormant mobile terminal will not request a reconnection or re-registration until its current packet zone is no longer listed in the Extended System Parameters message received from the base station in the cell in which it is currently located. Thus, the mobile terminal will not need to repeatedly initiate a reconnection in each packet zone as moves back and forth across packet zone borders. Alternatively, the Extended System Parameters message includes a special value packet zone identity that is interpreted by the receiving mobile terminal to mean "no change" and the mobile terminal will not request a reconnection or re-registration when said special value (border identifier) is sent. Both of these alternatives are also applicable to color code and registration zone domains to avoid ping-pong effects in border cells.

## Description

### Technical Field

This invention relates to wireless communications, and more particularly, to the repeated reconnection and/or re-registration of a dormant mobile terminal as it moves back and forth across the border between adjacent packet zones, color codes, and/or registration zones domains.

### Background of the Invention

Each wireless base station, such as a third generation (3G) CDMA2000 base station operating in compliance with the IS-2000 family of standards, broadcasts a packet zone identifier (PZID). The PZID is used in identifying different logical regions within the wireless network. When a dormant mobile terminal moves into the coverage area of a PZID not in an internally stored recently visited list, the mobile terminal will generally perform a packet zone connection to move the data session to the new packet zone. A mobile terminal on a packet zone boundary may "ping-pong" between the two zones, generating an excessive number of reconnections.

In the current stare of the art, a time-based hysteresis is used. When a mobile terminal goes dormant after sending or receiving data, it stores the PZID of only the most recently visited packet zone in which it had initiated a connection. Once a defined activation timer period expires, the mobile terminal internally thereafter stores a fixed number, such as four, of the PZIDs of packet zones it has most recently visited, including the ID of the packet zone in which it currently is logically connected. When the mobile terminal thereafter crosses the border of a cell within the first packet zone (having a Packet Zone ID of PZID1, for example) in which it had been active and connected, into a cell within a second packet zone (having a PZID of PZID2, for example), as indicated to it in the overhead configuration messages (e.g., Extended System Parameters message) transmitted by the base station in this cell within packet zone 2, it initiates reconnection in packet zone 2. The mobile terminal then stores PZID2 as the packet zone ID of the current packet zone, while also storing PZID1 in its list of recently visited packet zones. When PZID1 is shifted from being a current packet zone down the list of recently visited packet zones, it is stored with an associated timer of, for example, 60 seconds. At the end of that 60-second period, PZID1 is removed from the mobile terminal's stored list of recently visited packet zones. If the mobile terminal moves back into packet zone 1 before PZID1 expires on its list of recently visited packet zones, it doesn't reconnect in packet zone 1, but remains logically connected in packet zone 2. If the mobile terminal is still located in packet zone 1 when PZID1 expires on its list of recently visited packet zones at the end of its 60-second lifetime, it will initiate reconnection in packet zone 1, storing PZID1 as its current packet zone and moving PZID2 (with an associated 60-second timer) down on its stored list of recently visited packet zones. If, however, after moving back into packet zone 1 but before PZID1 expires on its stored list of recently visited packet zones, the mobile terminal moves back again to packet zone 2, it continues to be logically connected in packet zone 2, thereby avoiding being reconnected in packet zone 1 followed quickly by being reconnected in packet zone 2. When the timer associated with PZID1 eventually does expire after its lifetime (e.g., 60 seconds), a subsequent move from packet zone 2 back into packet zone 1 will cause the mobile terminal to initiate reconnection in packet zone 1 since PZID1 no longer appears on its list of recently visited packet zones.

Advantageously, the time hysteresis introduced by the timer associated with most recently visited packet zone IDs reduces ping-ponging of reconnections that would otherwise be performed as the mobile terminal quickly moves back and forth across the border between adjacent packet zones. Disadvantageously, the time hysteresis is only effective for the duration of the timer associated with a recently visited packet zone and transits across the border thereafter result in the reconnection of the mobile terminal in its currently visited packet zone even if that visit to the new packet zone is of short duration. The repeated signaling messages required between the mobile terminal and the base station to effect such multiple reconnections reduces the capacity of the air interface to support data transmissions.

The possible inability to page the mobile terminal when it moves into an adjacent packet zone is a further disadvantage of the time hysteresis afforded by the prior art. When the mobile terminal moves into an adjacent packet zone while remaining logically connected to its original packet zone, it could, if it is on a fast-moving vehicle, move sufficiently deep into the new zone to be out of the paging reach of a base station cell supporting the packet zone in which it remains logically connected. For example, when a mobile terminal starting in packet zone 1 moves into packet zone 2, it will reconnect in packet zone 2 and store PZID1 with a 60-second timer. If 10 seconds later the mobile terminal moves back into packet zone 1, it will remain logically connected in packet zone 2 since that is its current packet zone. Accordingly, should an incoming data transmission directed to that mobile terminal be received in the network, a base station supporting packet zone 2 will need to be able to page that mobile terminal in packet zone 1 for the remaining 50 seconds of the PZID1 timer. Thus, border cells need to be capable of delivering pages from adjacent packet zones or incoming transmissions could be delayed or lost. If the mobile terminal is on a fast moving vehicle, however, it could move deep into packet zone 1 beyond the paging reach of a border cell supporting packet zone 2 before the timer associated with PZID1 expires and it reconnects in packet zone 1. This increases the average latency of locating the mobile terminal and the number of failed network-initiated attempts to deliver data messages.

Similar problems as described above are associated with 1xEVDO data-only access terminals (ATs) in a wireless communications system operating in accordance with IS-856 standards. In such a system the different domains are designated with different color codes and the color code supported by a base station is provided to the AT in a QuickConfig message transmitted by the base station. Similarly, for mobile voice communications using the CDMA2000 standards, when the idle mobile terminal transits from one registration zone to another, it re-registers in the registration zone associated with the base station into whose coverage area it has moved. Registration is keyed off the registration zone, network ID, and system ID within the System Parameters message that is transmitted by the base station to the mobile terminals within its coverage area. The problems described associated with reconnecting a data capable mobile terminal or AT as it bounces back and forth across packet zone or color code boundaries are similarly associated with re-registering the mobile terminal multiple times as it transits back and forth across registration boundaries into different registration zones.

### Summary of the Invention

In accordance with an embodiment of the present invention, a base station at the border between different domains transmits information indicating that it supports more than one packet zone, color code, registration zone, or any other similar geographical grouping of cells or transmission areas. For the exemplary 3G CDMA2000 IS-2000 system, therefore, an Extended System Parameters message or ANSI-41 System Parameters message transmitted by a base station in a cell at the border between different packet zones includes additional entries indicating other adjoining packet zones that it also supports. A base station that supports a packet zone means that it can deliver a page to the mobile terminal on behalf of the supported packet zone for purposes of delivering data (for packet zone or color code embodiments) or a caii (for registration zone embodiments) from the network. The one entry that indicates the packet zone normally supported by the transmitting base station remains as a "primary" packet zone while additional fields at the end of the message include one or more additional entries of the "secondary" packet zones supported by that border base station, which indicate that the base station supports multiple domains. In a similar manner, for the exemplary 1xEVDO IS-856 system, the QuickConfig message transmitted by a base station in a cell at the border between different color codes includes additional entries of other adjoining color codes that indicate the "secondary" color zones supported by that border base station. Similarly, the System Parameters/ANSI-41 System Parameters message transmitted by a base station in a border cell indicates the primary registration zone being supported by that base station as well as any secondary registration zone being supported from an adjoining domain.

When transiting the borders between domains, the mobile terminal or AT will not re-register or request a reconnection until its current packet zone, color code, registration zone (or other domain type) is no longer listed as being secondarily supported in the Extended System Parameters message, ANSI-41 System Parameters message, the QuickConfig message, or the System Parameters message, received from the base station in the cell in which it currently is located. Thus, if the mobile terminal/AT moves back and forth between adjoining packet zones, color codes, or registration zones, it will not initiate reconnection or re-registration as long as it remains it in a border packet zone, color code, or registration zone that still supports the packet zone, color code, or registration zone, respectively, in which it is currently connected. Advantageously, this methodology affords a deterministic, spatial rather than time hysteresis, that precludes ping-ponging of reconnections between adjacent domains as the mobile terminal moves back and forth across domain borders.

In an alternate embodiment, a single packet zone/color code/registration zone identifier is designated as a "border" identifier that represents "no change" to the receiving mobile terminal. A border base station transmits the Extended System Parameters message, the QuickConfig message, the System Parameters message, or any equivalent message, using this "border" domain identifier instead of an actual geographically associated packet zone, color code, or registration zone, respectively, identifier. A mobile terminal/AT upon entering the coverage area of a border base station and receiving from that base station a message with this special border packet zone/color code/registration zone identifier, does not reconnect or re-register, but continues using its previous current packet zone, color code, or registration zone until such time as it enters the coverage area of a base station in a non-border cell in the new domain and receives a message containing the new domain's actual geographically-associated packet zone identifier, color code, or registration zone. Thus, the mobile terminal will not reconnect or re-register as it bounces back and forth between cells in different domains until it has moved sufficiently away from the border and into a new domain.

### Brief Description of the Drawing

FIG. 1 is a domain map showing multiple domains supported in accordance with an embodiment of the present invention in which base stations transmit primary and secondary supported domains;
FIG. 2 shows an example of usage of the multiple domain support of FIG. 1; and
FIG. 3 shows multiple domains supported in accordance with an embodiment of the present invention in which border base stations transmit a special "no change" domain identifier.

### Detailed Description

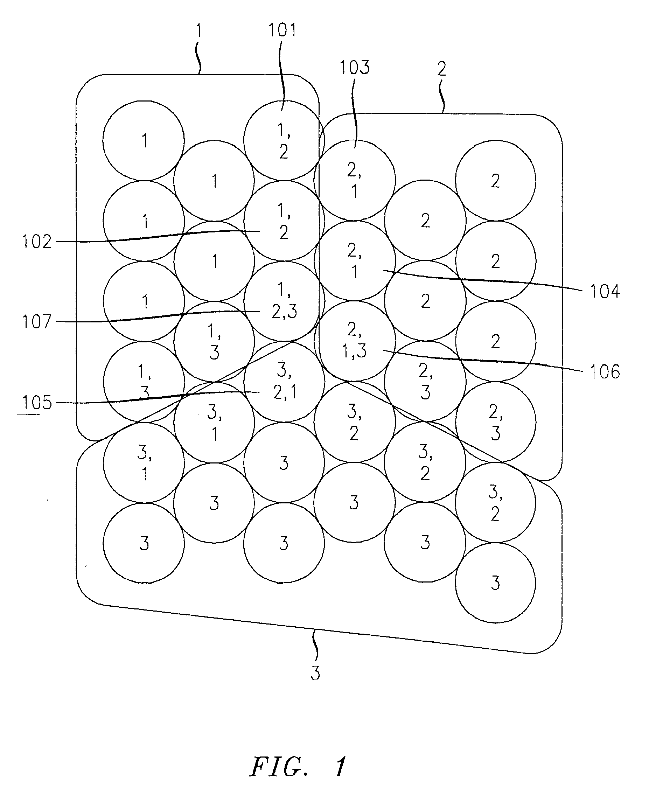

In a first described embodiment, it is assumed for purposes of explanation that the mobile terminals and the wireless system are operating in accordance with CDMA2000 IS-2000 standards for data transmission. In this embodiment, base stations in cells at the border between two different packet zones support both of the packet zones of the adjoining domains. FIG. 1 shows a domain map having three illustrative packet zones 1, 2 and 3. The numerals within circle, representing the coverage area of a cell, indicate the packet zone or zones supported by that cell. Thus, base stations in border cells 101 and 102 in packet zone 1 and base stations in cells 103 and 104 in packet zone 2 support both packet zones 1 and 2, as indicated by the numerals 1 and 2 within the circles. Similarly, the border cells between packet zone 1 and packet zone 3, and the border cells between packet zone 2 and packet zone 3 support both respective adjoining packet zones. Also, cells 105, 106 and 107 that adjoin all three packet zones 1, 2 and 3 each support all three packet zones, as indicated by the numerals 1, 2 and 3 within the illustrative circles.

Information regarding the packet zones supported by a base station is given by the Extended System Parameters message transmitted by the base station. The entry used in the prior art for the single supported packet zone contains, in this embodiment, the "primary" packet zone, with additional fields at the end of the Extended System Parameters message including one or more additional entries for "secondary" packet zones. The presence of such optional additional entries in the Extended System Parameters message is indicative that the transmitting base station supports multiple domains.

When transiting the border between packet zone domains, the mobile terminal does not request a reconnection until such time as its current stored packet zone is no longer listed in an Extended System Parameters message received from its local base station. Thus, regardless of how long a mobile terminal remains in a new packet zone, which also supports its current stored packet zone, it will not request a reconnection. Thus, if the mobile changes directions back towards its previous packet zone to which it is still logically connected, it will not request a reconnection. Unlike the time-limited hysteresis provided by the afore-described prior art, which eliminates ping-ponging of reconnections as the mobile terminal moves back and forth between two packet zones for only as long as the lifetime of an entry of that packet zone on the mobile terminal's list of recently visited packet zones, this embodiment affords a deterministic, spatial hysteresis that completely precludes ping-ponging between different packet zone domains along the borders between adjoining domains.

When an incoming data message arrives for a mobile terminal that has moved across the border region into a new packet zone with cells that support the packet zone from which it has exited and where it is still logically connected, a cell supporting the packet zone where the mobile is logically connected will transmit a page for that mobile terminal. Thus, in FIG. 1, when a mobile terminal connected in packet zone 2 within cell 104 moves across the border into cell 102 within packet zone 1 and a data packet arrives through packet zone 2 for that mobile terminal, a base station in new packet zone 1 will page the mobile as if it was paging from within packet zone 2. When different vendors or systems exist in adjoining packet zones, intervendor and inter-system connections will need to be made in order to support multiple packet zones at the boundaries for the delivery of paging messages across these boundaries.

Advantageously, since the mobile terminal does not change domains when it transits back and forth across the border, the chances of losing data during transitions are greatly reduced. Additionally, in the case where the mobile moves deeper into the packet zone, it will initiate a reconnection immediately upon moving outside the border area where its current packet zone is supported as opposed to when the previous packet zone's associated timer expired as in the prior art.

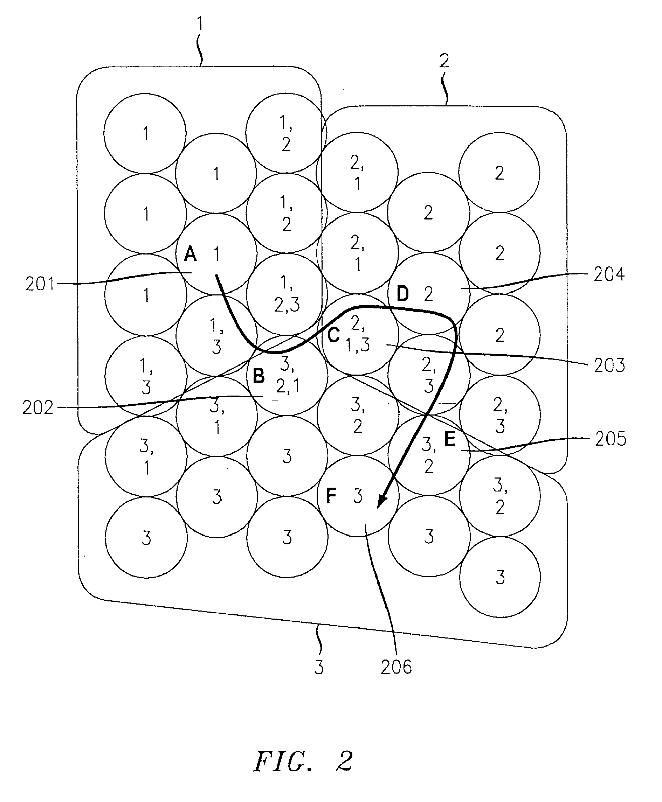

FIG. 2 illustrates the application of the methodology of this described embodiment as a mobile terminal transits back and forth across the borders of packet zones 1, 2 and 3 in the illustrative packet zone map of FIG. 1. The numerical references to packet zones 1, 2 and 3 are the same as are used in FIG. 1. As in FIG. 1, the numerals in the cell circles within each packet zone represent the packet zones supported by the base station in each cell. The mobile terminal is assumed to start a session at point A in cell 201 within packet zone 1, where it is given a session identifier. It then travels within packet zone 1 to point B within cell 202 in packet zone 3. Since the base station in cell 202 supports packet zone 1, the mobile terminal does not reconnect in packet zone 3. At this point, any page messages for the mobile terminal that include the entire packet zone 1 will still be delivered to all mobile terminals monitoring cells that have either a primary or secondary packet zone of 1. From point B, the mobile terminal travels to point C in cell 203 within packet zone 2. Since the mobile terminal's current packet zone (zone 1) is still supported, it does not reconnect in packet zone 3. The mobile terminal then moves to point D within cell 204. Since packet zone 1 is not supported in cell 204, the mobile terminal reconnects at this point and changes its current packet zone to packet zone 2. The mobile terminal then moves to point E within cell 205 in packet zone 3. Since packet zone 2 is still supported as a secondary packet zone here, the mobile terminal does not reconnect to packet zone 3. When the mobile terminal reaches point F within cell 206 in packet zone 3, it reconnects in that packet zone since packet zone 2 is not supported within that cell. Advantageously, the described path only requires two reconnections whereas the prior art methodology could have required many more depending on how long it takes to transit the path, as well as other factors such as, the distance of the path to the borders of the packet zones, and other fluctuations in border conditions that could have triggered a reconnection. A mobile terminal traveling only between points A and C alone, would not have to reconnect at all whereas the prior art methodology could require multiple reconnections depending on the speed of travel and other border conditions.

In the above-described path, when the mobile terminal reaches point E in packet zone 3, it does not reconnect since its current packet zone, zone 2, is supported as a secondary packet zone in the Extended System Parameters message being received from the base station in the border cell 205 in packet zone 3 in which it is located. If the mobile terminal remains in the coverage area of that border cell for longer than a predetermined time, it could optionally reconnect to get connected to the primary packet zone 3.

The packet zone embodiment described above could be applied to other domains as for example, wireless systems and mobile data-only 1xEVDO terminals operating in accordance with IS-856 standards. In such a system, different domains are designated as color zones and information regarding a primary color zone and other supported color zones would be provided to the mobile terminal, referred to as an access terminal (AT), via the QuickConfig message transmitted by the local base station. Since, however, an AT's address is only unique within a domain, sufficient information will need to be added to the page messages to ensure that only one AT replies or has a connection made. When the AT replies, however, even though it was paged with the identity given it by its previous domain, it will follow the instruction/rules for access applicable to the primary domain in which it has moved.

Another embodiment of the invention could also be incorporated into a 2G or 3G voice/data wireless communications system for the registration of a mobile terminal in border registration zones. In this embodiment, a border base station transmits a System Parameters message that indicates a primary registration zone being supported by that base station as well as any secondary registration zones from an adjoining domain that the base station also supports. As the mobile terminal crosses the border from a first registration zone into a second, it will not re-register in the second registration zone if the base station in the cell in that second registration zone into which has moved also supports the first registration zone. As in the packet zone/color code embodiments described above for data transmissions, the mobile terminal does not re-register until it moves into the coverage area of a base station within a cell that does not support its current registration zone, or optionally as described above, remains in a the coverage area of a border base station for longer than a predetermined time.

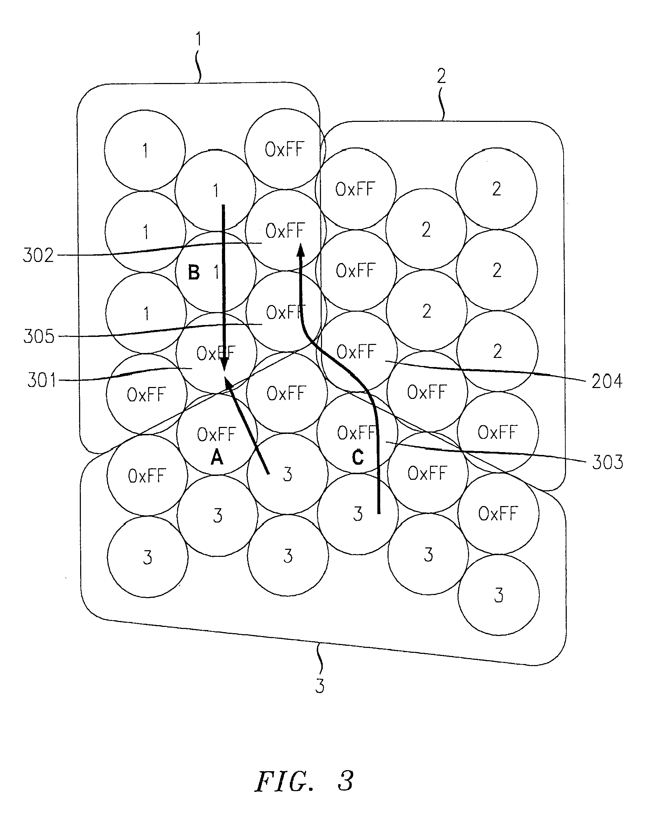

In an alternate embodiment, applicable to packet zones/color codes/registration zones, rather than transmitting an Extended System Parameters/QuickConfig/System Parameters message that indicates a primary and one or more secondary supported packet zones/color codes/registration zones, a special value packet zone/color code/registration zone is transmitted by border base stations that is interpreted by a receiving mobile station within such a base station's service area as meaning "no change." Thus, rather than transmitting an 8-bit PZID value that represents a numerically identifiable value, the PZID transmitted by a border base station is a special value not otherwise used in the network to represent any PZID value actually used in the system, such as an all "1" (0xFF) PZID value. FIG. 3 shows a domain map, as in FIG. 1, subdivided in three packet zones, 1, 2 and 3, as in FIGS. 1 and 2. The base stations within non-border cells that are wholly within packet zone 1 transmit PZID1, the base stations within non-border cells that are wholly within packet zone 2 transmit PZID2, and the base stations within cells that are wholly within packet zone 3 transmit PZID3. The base stations in the border cells in packet zone 1 that are adjacent to packet zones 2 and 3, the base station in the border cells in packet zone 2 that are adjacent to packet zones 1 and 3, and the base stations in the border cells in packet zone 3 that are adjacent to packet zones 1 and 2 all transmit that special value PZID of 0xFF. A mobile terminal moving from a packet zone with an identifiable PZID into a border cell and receiving a PZID of 0xFF, interprets that PZID value to mean "keep the PZID the same as the current stored value." A mobile terminal on path A moving from within packet zone 3 into border cell 301 in packet zone 1 would consider itself as being in packet zone 3 while a mobile terminal on path B moving from within packet zone 1 into the cell 301 would consider itself as being in packet zone 1 even though both mobile terminals are in the same cell. The resultant effect on packet zone reconnections is the same as if the base station in cell 301 in the border region was transmitting both packet zone values, as in the afore-described embodiment. Advantageously, supporting this special PZID value provides backwards compatibility to existing standards where only a single PZID value is transmitted. Where more than two packet zone regions intersect, certain routes could disadvantageously result in a mobile terminal being out of reach. For example, the mobile terminal on path C, which starts as being connected in packet zone 3, would be out of reach at the end of its path in the cell 302 in the border region of packet zone 1 since its path only passes through border cells 303, 304 and 305 and the mobile terminal has no opportunity to reconnect in a packet zone that is supported in its end destination 302. Eventually, it will reconnect in packet zone 1 in which it is sitting. As in the previous embodiments, if the mobile terminal stays within a border cell for longer than a predetermined time, it could reconnect in the packet zone in which it is currently sitting.

This embodiment could equally be applied to color codes and/or registration zones.

The above-described embodiments could be applied to any wireless system using any present or future technology or operating in accordance with any present or future standards, in which a mobile terminal of any type that is transmitting and/or receiving any combination of voice, data, video, multimedia, etc., reconnects or re-registers when it moves across a border from one domain to another.

The preceding merely illustrates the principles of the invention. It will thus be appreciated that those skilled in the art will be able to devise various arrangements, which, although not explicitly described or shown above, embody the principles of the invention and are included within its spirit and scope. Furthermore, all examples and conditional language recited herein above are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

In the claims hereof any element expressed as a means for performing a specified function is intended to encompass any way of performing that function including, for example, a) a combination of circuit elements which performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. Applicant thus regards any means which can provide those functionalities as equivalent as those shown herein.

## Claims

1. A method in a wireless communications system comprising:
transmitting domain information that indicates a domain that is supported in an area from which the information is transmitted,
**characterized in that**:
the information indicates that a plurality of different domains are supported in the area.

2. The method of claim 1 wherein the information is transmitted in a border area proximate to a border between at least two adjacent supported domains.

3. The method of claim 2 wherein the plurality of different domains comprise a primary domain and at least one secondary domain, the primary domain being the domain supported in the area from which the information is transmitted and the at least one secondary domain being at least one adjacent supported domain.

4. The method of claim 3 wherein the different domains are different packet zones.

5. The method of claim 3 wherein the different domains are different color codes.

6. The method of claim 3 wherein the different domains are different registration zones.

7. A method in a wireless communications system comprising:
transmitting domain information that indicates a domain that is supported in a receiving area of the information,
**characterized in that**:
the domain information comprises a special domain value that indicates that the area from which it is transmitted is a border area proximate to a border between at least two unidentified adjacent supported domains.

8. The method of claim 7 wherein the different domains are different packet zones.

9. The method of claim 7 wherein the different domains are different color codes.

10. The method of claim 7 wherein the different domains are different registration zones.
